# EUROPEAN PATENT APPLICATION

(11) **EP 2 701 343 A1**
(43) Date of publication of application: **26.02.2014**
(21) Application number: 13181337.0
(22) Date of filing: 22.08.2013
(51) Int. Cl.: H04L 12/24, H04L 29/14, H04L 12/711, H04L 12/703

(54) **System and method of failure handling in a radio access network**

(30) Priority: 22.08.2012 ES 201231321
(71) Applicant: Vodafone IP Licensing Limited, The Connection Newbury Berkshire RG14 2FN (GB); Vodafone España, S.A.U., 28108 Alcobendas (ES)
(72) Inventor: Prieto Castro, Mario, 28150 Madrid (ES); Sanchez Martin, Jose Antonio, 28150 Madrid (ES); Barrero Gomez, Pascual, 28150 Madrid (ES); Ortuzar Garcia, Victor, 28150 Madrid (ES); Forment Tarrega, Maite, 28150 Madrid (ES); Izquierdo Millanes, Carlos, 28150 Madrid (ES); Martinez Talavera, Francisco Jesus, 28150 Madrid (ES); Sanchez Sanz, David, 28150 Madrid (ES)
(74) Representative: Ferrara, Simone

(57) **Abstract**

Method and system of failure handling in a radio access network (1) that minimizes the recovery time when a core node (3) fails by storing the routing information of the core node (3) and, whenever said core node (3) fails, loading the routing information in an auxiliary node (4) with the same hardware and software configuration as the core node (3). The traffic received at the core node (3) is then routed to the auxiliary node (4) through a physical connection (5) that is transparent to the radio access network (1). The amount of routing information required by this system is minimal, and thus the recovery time is greatly reduced.

## Description

### FIELD OF THE INVENTION

The present invention relates to radio access networks and, more particularly, to failure recovery in such networks.

### BACKGROUND OF THE INVENTION - RELATED ART

In modern radio access networks (RAN), core nodes serve great amounts of traffic coming from the radio elements connected to the RAN. However, in the event of a failure of a core node, all the incoming traffic needs to be redirected to other core nodes in order to restore the service of the network.

The traditional solution to this problem is to use a pool of core nodes. For example in a Global System for Mobile Communications (GSM) or Wideband Code Division Multiple Access (WCDMA) network, the pool of nodes is a pool of Serving General Packet Radio Service (GPRS) Support Nodes (SGSN). A node pool is a collection of nodes configured to serve any common part of a radio network, referred to as the pool service area. The pool service area consists of several Routing Areas (RAs) served by Base Station Controllers (BSCs) or Radio Network Controllers (RNCs) in a GSM or WCDMA radio network, respectively. The BSCs and RNCs serving pool service areas are logically connected to all the SGSNs serving them.

The SGSNs in a pool share the load from all Mobile Stations (MSs) in the pool service area. As long as an MS remains in the pool service area, it is normally attached to one SGSN. If an SGSN becomes unavailable, the BSC or RNC reroutes the signaling and payload for the MSs served by it to another SGSN in the SGSN pool.

In case of failure of a SGSN, all the traffic served by the failing SGSN needs to be relocated to other SGSNs of the pool.

As a particular example, WO 2009/077002 A1 presents an apparatus to recover from node failure in which each node periodically sends a heartbeat signal to prove its correct operation to the rest of nodes in a node pool. When the heartbeat signal is not received by the rest of the nodes, the apparatus is activated as a pool proxy towards the network node.

However, relocating traffic in a node pool when one of the nodes failing presents two main problems:
- Redirecting the traffic implies reconfiguring the involved nodes, typically requiring loading large backup files generated by the failing node. The transmission and loading time of these large files slows the recovery process, increasing the amount of time that the network cannot function properly.
- If the amount of traffic handled by the node prior to its failure is greater than the free capacity of the remaining functional nodes, not all the incoming traffic can be correctly served, resulting in failed connections to the elements connected to the network.

As a consequence, there is a need for a method and system capable of handling the failure of a core node, providing service to the totality of incoming traffic, and reducing the time required to regain full operativity.

### SUMMARY OF THE INVENTION

The current invention solves the aforementioned problems by disclosing a method and system of failure handling in a radio access network with a devoted contingency node and reduced data transfer to restore network operation.

In a first aspect of the present invention, there may be provided a method of failure handling in a radio access network (1) served by a core node (3), wherein the method comprising:
- providing routing information of the core node (3); said information being adapted to route all traffic served by the core node (3);
- if the core node (3) is free of failure:
   - preventing any traffic from the radio access network (1) being routed to the auxiliary node (4);
- if the core node (3) fails:
   - loading in the auxiliary node (4) the routing information; and,
   - routing all traffic from the radio access network (1) intended for the core node (3) to the auxiliary node (4).

In a further aspect of the present invention, there may be provided a system of failure handling in a radio access network (1) comprising a core node (3) configured to serve the radio access network (1), and an auxiliary node (4), the auxiliary node (4) having substantially the same hardware and software configuration as the core node (3), wherein the system is configured to:
- provide routing information of the core node (3); said information being adapted to route all the traffic served by the core node (3);
- if the core node (3) is free of failure, prevent any traffic from the radio access network (1) to be routed to the auxiliary node (4); and,
- if the core node (3) fails, route all traffic from the radio access network (1) intended for the core node (3) to the auxiliary node (4).

Advantageously, with the present method and system, the amount of time during which the network is inoperative when a core node fails, is greatly reduced. Additionally, by using an auxiliary node which is only used for contingencies in the network, it is always able to serve all the incoming traffic, whereas in solutions with pool nodes, all the nodes are already serving the network and can thus be overloaded if the traffic derived from the failing nodes exceeds their free resources.

Typically the present solution results in only 20 minutes of service unavailability and two technicians working to implement the solution. The traditional solution can result in as long as forty eight hours or more of service unavailability and may require as many as six technicians working full time.

These and other advantages will be clear in the light of the detailed description of the invention.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and nonlimiting character:
Figure 1 shows a schematic of a particular embodiment of the system of the invention, as well as a network in which it is applied;
Figure 2 presents a schematic of a second embodiment of the system of the invention, as well as a network in which it is applied;
Figure 3 illustrates an alternative view of the system of the invention, as well as a network in which it is applied.

### DETAILED DESCRIPTION OF THE INVENTION

The matters defined in this detailed description are provided to assist in a comprehensive understanding of the invention. Accordingly, those of ordinary skill in the art will recognise that variation, changes and modifications of the embodiments described herein can be made without departing from the scope and spirit of the invention.

Note that in this text, the term "comprises" and its derivations (such as "comprising", etc.) should not be understood in an excluding sense, that is, these terms should not be interpreted as excluding the possibility that what is described and defined may include further elements, steps, etc.

Also note that the following description considers the particular case of an auxiliary node connected to a single core node. However, the present invention can be applied to an auxiliary node connected to multiple core nodes. In that case, the auxiliary node acts as a replacement for the first core node to fail, loading the routing information of said failing core node.

A method of failure handling in a radio access network (RAN) is presented. The radio access network is served by at least one core node, which may be connected to an auxiliary node with the same hardware characteristics. While the core node is functioning properly, no traffic from the RAN is routed to the auxiliary node, which remains inactive. However, if the core node fails and cannot route correctly all the incoming traffic, said traffic is routed to the auxiliary node through a physical connection that is transparent to the devices connected to the RAN.

In order for the auxiliary node to be able to handle the incoming traffic properly, whenever the core node fails, all its routing information is loaded into the auxiliary node. Since the hardware and software of auxiliary node are in compliance with the hardware and software of the core node, - preferably, both the core node and the auxiliary node share the same hardware and software characteristics-, instead of large backup files, only the routing information needs to be sent from the core node into the auxiliary node. By reducing the amount of data needed to resume with network operation, the length of time in which the RAN is inoperative is greatly reduced.

There are two preferred options in order to send the routing information from the core node to the auxiliary node:
- Sending the routing information whenever the core node fails. This transmission is performed through the same channel (physical connection) through which incoming traffic is transmitted in case of failure of the core node.
- Sending the information periodically to an external server, in which the last version of the routing information is stored and can be retrieved by the auxiliary node in case of failure of the core node.

In order to reduce the amount of data transferred and the time needed to resume with the network operation, both the core node and the auxiliary node need to operate with the same software configuration. Two preferred options are presented for this requisite:
- If the auxiliary node acts as a contingency node for a single core node, or if it acts as contingency node for multiple core nodes with the same software configuration, said software configuration is permanently loaded into the auxiliary node.
- If the auxiliary node acts as a contingency node for multiple core nodes with different software versions, all the software versions are stored, and in case of failure of a core node, the auxiliary node loads the particular software version used by the core node that has failed.

A system is also presented which implements the method of the invention. The system comprises at least one core node, an auxiliary node, and preferably, an external server. The auxiliary node is connected to the core node (or nodes) intended to replace in case of a contingency, and has preferably the same hardware configuration. The hardware and software of the auxiliary node are in compliance with the hardware and software of the connected core node. In case of acting as a contingency node for multiple core nodes, all the core nodes need to either have the same hardware configuration, or have hardware configurations that can operate indistinctly from the perspective of the software and operative system.

The core node, while functioning properly, is configured to serve all incoming traffic of the network, without sending any of that traffic to the auxiliary node. The routing information needed to serve said traffic is sent by the core node so, in case of failure, incoming traffic is routed to the auxiliary node. Since the auxiliary node has the same hardware and software configuration, and uses the routing information sent by the core node, the connection between core node and auxiliary node is transparent to the RAN.

In case of partial or complete failure of the core node, the auxiliary node is configured to load the routing information sent by the core node, and to serve all incoming traffic directed to the core node and rerouted to the auxiliary node by the core node. Preferably, in order to load the routing information, said information can either be sent directly through the physical communication with the core, or sent to the external server, and then retrieved from said server by the auxiliary node.

Also preferably, two options are presented regarding the software configuration of the auxiliary node:
- If the auxiliary node is connected to a single core node, or if it connected to multiple core nodes with the same software configuration, the auxiliary node is permanently configured with said software configuration.
- If the auxiliary node is connected to multiple core nodes with different software versions, all the software versions are stored, and in case of failure of a core node, the auxiliary node is configured to load the particular software version used by the core node that has failed.

Both the method and system of the invention are preferably applied to the following networks:
- A General Packet Radio Service (GPRS) voice network. Accordingly, both the core node and the auxiliary node are Serving GPRS Support Nodes (SGSN). In this case, the routing information transferred is one or more files containing the checkpoints used to route incoming traffic in the core node.
- A mobile data communication network. In this case, accordingly, both the core node and the auxiliary node are Mobile Switching Stations (MSS). In this case, the routing information transferred is one or more files containing the Internet Protocol (IP) information used to route incoming traffic in the core node.

Exemplary implementations of embodiments of the present invention will now be described with reference to the accompanying figures.

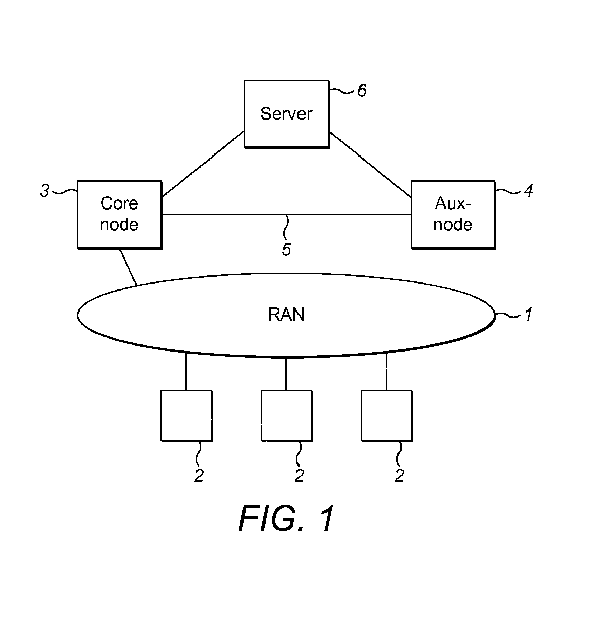

Figure 1 shows a schematic of a particular embodiment of the system of the invention, and a radio access network 1 to which it is applied. Accordingly, the system implements a particular embodiment of the method of the invention as herein described.

The RAN 1 provides service to a plurality of radio elements 2 through a core node 3. The core node 3 is connected to an auxiliary node 4 through a connection 5. Additionally, both the core node 3 and the auxiliary node 4 are connected to an external server 6.

Both the core node 3 and the auxiliary node 4 have either the same hardware configuration, or compatible hardware configurations that involve no difference at the software and routing levels. For example, the core node 3 and the auxiliary node 4 have the same type of boards, although the number of boards can be different and the system can work providing an auxiliary node 4 with fewer boards than the core node 3. In case of failure of the core node 3, the software configuration of both the core node 3 and the auxiliary node 4 needs to be substantially the same. That is, the auxiliary node 4 is to be in compliance with the core node 3 at the same software level. For this reason, the auxiliary node 4 can either be configured permanently with the same software as the core node 3, or retrieve the appropriate software version from a pool of versions available among the core nodes 3 connected to the auxiliary node 4. Said pool of versions can be stored in the auxiliary node 4, or in the external server 6.

During normal operation of the core node 3, all the incoming traffic of the RAN 1 is served by the core node 3. That is, no traffic is redirected to the auxiliary node 4 while the core node 3 functions properly. However, the connection 5 between the core node 3 and the auxiliary node 4 presents enough broadband to transfer all the traffic incoming at the core node 3 in case of failure.

In case of failure of the core node 3, the routing information of the core node 3 is loaded in the auxiliary node 4, and all the traffic is redirected to the auxiliary node 4 through the connection 5. This redirection is transparent to the RAN 1, which still addresses its traffic to the core node 3.

The routing information can either be sent by the core node 3 directly to the auxiliary node 4 whenever the core node 3 fails, or can be periodically stored in the external server 6 and retrieved by the auxiliary node 4 in case of failure.

Note that the routing information loaded by the auxiliary node 4 only contains routing information to be used by the same software and hardware. That is, the routing information is not a full backup file as in traditional failure handling systems. By assuming there is no change in hardware and software, the amount of data that is transferred is greatly reduced, as it only needs to contain the particular routing information of the radio elements 2 connected to the RAN 1. This way, RAN 1 operation can be restored in a much shorter time.

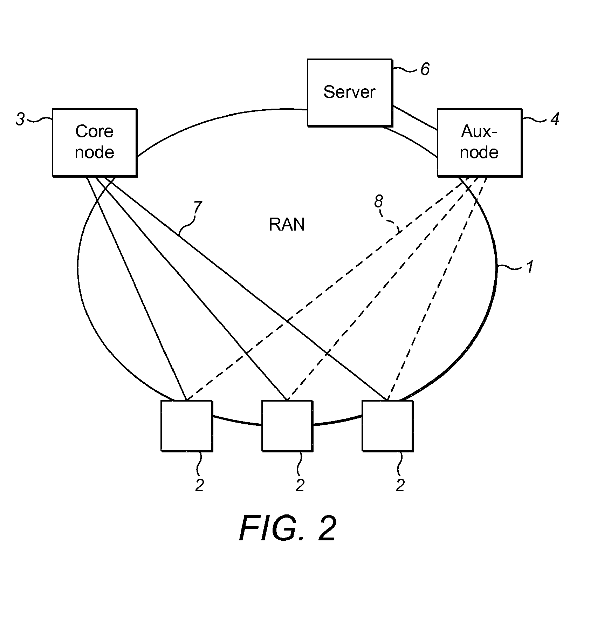

Figure 2 shows another embodiment of the system of the invention, in which the radio elements 2 are connected to the core node 3 through a first set of connections 7 through the RAN 1. When the core node 3 fails, and can no longer provide service to the radio elements 2, the configuration of said core node 3 is loaded in the auxiliary node 4. A second set of connections 8 is then established between the radio elements 2 and the auxiliary node 4, by modifying their routing information, and without modification of the physical channels. The auxiliary node 4 is preferably located in the same physical location as the external server 6 to facilitate data transfer between them, thus minimizing the effects of failure in the RAN 1. The external server 6 may be connected to the RAN 1, and may store the configuration and routing information of the core node 3.

A particular implementation is presented for the case in which the RAN 1 is a GPRS network. Accordingly, the core node 3 and the auxiliary node 4 are SGSN nodes. In this case, while traditional solutions use huge backup files, the present invention only loads in the auxiliary node 4 the data corresponding to the routing configuration of the SGSN core node.

The routing configuration, also known as checkpoints, is typically a folder containing the configuration files needed for the software to correctly route all the incoming traffic. Since both the core node 3 and the auxiliary node 4 share the same hardware and software configuration, the amount of transferred configuration data is reduced. The recovery time is thus reduced from hours to the range of minutes.

Traditional backup files comprise all the following information:
- Checkpoints: specific configuration of the node for routing purposes
- Software information: operative system, release version of the node, etc.
- Hardware information: card distribution, etc.

On the contrary, the present invention only requires the transfer of the checkpoints, since it is ensured that the hardware and software information of the core node 3 is already loaded in the auxiliary node 4.

Notice that a SGSN can contain different release versions of the node, and activate an specific release version when required.

A second particular implementation is presented for the case in which the RAN 1 is an IP data network served by a core node 3 which is a Mobile Switching Station MSS. Accordingly, the radio elements comprise the classical structure of Radio Network Controllers (RNC), Base Station Controllers (BSC), Home Location Register (HLR), Signal Transfer Points (STP), etc. Said structure provides service to a plurality of user devices, and is served by the core MSS.

The auxiliary node is thus also a MSS, and the connection 5 for the traffic intended for the core MSS to be sent to the auxiliary node 4 is performed by IP tunnelling through a single connection. This connection 5 is thus transparent to the RAN 1.

Since the auxiliary MSS is reserved for contingencies and does not handle any traffic during normal operation of the core MSS, operation of the network after failure presents no additional complexity, such as new BSC/RNC integration, rescaling of the radio network-core node interface, etc.

Also, since the auxiliary MSS comprises the same hardware and software configuration as the core MSS, only the specific MSS configuration regarding IP routing information is transferred to the auxiliary MSS, greatly reducing recovery time compared to system using full backup files comprising also the hardware and software information.

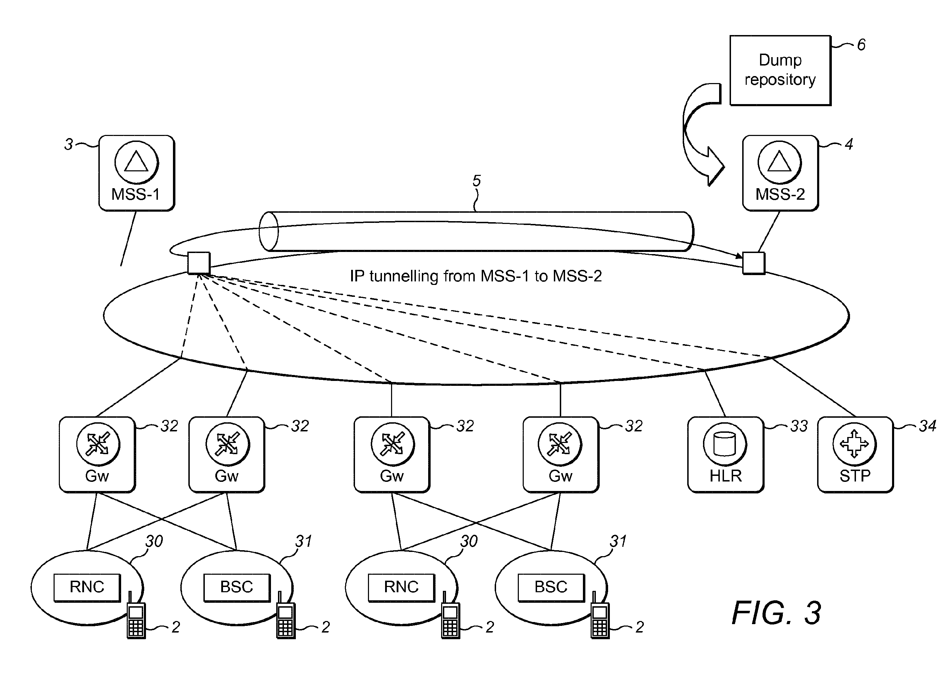

Figure 3 is an alternative view of the above described second particular implementation. Illustrated are the Radio Network Controllers (RNC) 30, Base Station Controllers (BSC) 31, Media Gateways 32, Home Location Register (HLR) 33 and Signal Transfer Points (STP) 34. IP tunnelling is used to pass traffic from the affected MSS 3 the contingency, or auxiliary, MSS 4. A Dump repository is used to load affected MSS-1 3 into contingency MSS-2 4.

In summary, there are two main steps involved in the present solution. The first is to transfer configuration data from the core node to the auxiliary node. The auxiliary node may be a node which does not carry live traffic but is connected to the network in the normal manner and is operated as a normal node. Preferably, the auxiliary node thus becomes a clone of the core node. The next step is for signalling traffic to be routed to the auxiliary node. This may be done through the methods described above such as a direct link or IP tunnelling. In this way, service can be restored relatively quickly since the auxiliary node is capable of providing service straightaway. Collateral functions such as statistics or billing can be obtained from the auxiliary node.

Backup from the code node to the auxiliary node may be performed live or from a previously saved backup. The present solution provides for easy resolution in the event of the problem affecting service being fixed.

As described above, the present solution provides faster service resolution in the event of core node failure. The conventional solution of handling failure is to "reparent" the BSC and RNC served by the affected node towards another node, that is, moving them to another MSS of the network. This reparenting involves a drastic reengineering process and reconfiguring the network. Access nodes (BSC and RNC) must be configured for an unaffected node. There are a lot of actions that must be taken because it requires many configuration changes in the node and also in the BSC, RNC, and in the MGW (Media Gateway nodes) too. The 2G and 3G cells under the affected node must be moved and all related data must be changed including recalculation of LAI (location areas) and cell neighbourhoods for handovers.

There is a huge amount of data and many technicians necessary to perform these changes and they can last for some hours, depending on the number of BSCs and RNCs affected. The present solution provides a significant difference in recovery time (from minutes in new solution to hours in classic solution).

Conventional solutions attempt to avoid impacting on the live network when applying the configuration changes needed in the unaffected live nodes, controllers and gateways. However, in real contingency scenarios, reconfiguration data and changes applied in a fast way and in a stressed situation lead to mistakes and configuration mismatches that can affect live traffic. This is avoided with solution of the present invention.

As other unaffected nodes must carry the traffic of affected nodes, the conventional solution can cause congestion troubles and overloading in the nodes or in routes. Node and network traffic and signalling routes are not dimensioned to carry that extra traffic and can have capacity problems and cause traffic loss.

In the GPRS field, failure handling may be provided by providing a backup which generates a group of large files. Typically, the entire node is backed up to restore a machine if a problem appears, including such aspects as the operating system of the node. The present invention requires merely configuration information to be provided to the auxiliary node, rather than a complete backup. Thus the time for the backup or auxiliary node to be operational is significantly reduced.

The present invention may be applicable to all nodes that have similar hardware and that have their connections to network using IP such that traffic can be easily rerouted through the IP networks.

## Claims

1. Method of failure handling in a radio access network (1) served by a core node (3), wherein the method comprising:
- providing routing information of the core node (3); said information being adapted to route all traffic served by the core node (3);
- if the core node (3) is free of failure:
- preventing any traffic from the radio access network (1) being routed to the auxiliary node (4);
- if the core node (3) fails:
- loading in the auxiliary node (4) the routing information; and,
- routing all traffic from the radio access network (1) intended for the core node (3) to the auxiliary node (4).

2. Method according to claim 1, wherein the step of providing routing information further comprises sending the routing information through a physical connection (5) between the core node (3) and the auxiliary node (4) whenever the core node (3) fails.

3. Method according to claim 1, wherein the step of providing routing information further comprises:
- periodically storing the routing information in an external server (6);
and wherein the step of loading the routing information in the auxiliary node (4) further comprises:
- retrieving the routing information from the external server (6).

4. Method according to any of the previous claims wherein the auxiliary node (4) has hardware and software in compliance with the hardware and software of the core node (3) and/or is configured to have the same software configuration as the core node (3).

5. Method according to any of claims 1 to 3 wherein the method further comprises, if the core node (3) fails:
- loading in the auxiliary node (4) a software from a plurality of software versions, wherein the loaded software is the same software used in the core node (3).

6. Method according to any of the previous claims, wherein:
the core node and the auxiliary node (4) are Serving General Packet Radio Service Support Nodes, and the routing information is a plurality of checkpoints of the core node (3); or
the core node (3) and the auxiliary node (4) are Mobile Switching Center nodes, and the routing information is Internet Protocol routing information.

7. Method according to any of the previous claims, further comprising:
- connecting the core node (3) to the auxiliary node (4).

8. Method according to any of the previous claims, wherein the step of loading the routing information further comprises:
loading the routing information through a physical connection (5) between the core node (3) and the auxiliary node (4) transparent to the radio access network (1).

9. Method according to any of the previous claims, wherein, if the core node (3) fails, the method further comprises:
- routing in the auxiliary node (4) all traffic received at the core node (3) using the loaded routing information.

10. Method according to claim 1, in which the step of routing all traffic from the radio access network (1) intended for the core node (3) to the auxiliary node (4) is performed using IP tunnelling.

11. System of failure handling in a radio access network (1) comprising a core node (3) configured to serve the radio access network (1), and an auxiliary node (4), the auxiliary node (4) having substantially the same hardware and software configuration as the core node (3), wherein the system is configured to:
- provide routing information of the core node (3); said information being adapted to route all the traffic served by the core node (3);
- if the core node (3) is free of failure, prevent any traffic from the radio access network (1) to be routed to the auxiliary node (4); and,
- if the core node (3) fails, route all traffic from the radio access network (1) intended for the core node (3) to the auxiliary node (4).

12. System according to claim 11, wherein the core node (3) is further configured to send the routing information through a physical connection (5) between the core node (3) and the auxiliary node (4) whenever the core node (3) fails.

13. System according to claim 11, further comprising an external server (6), wherein the core node (3) is configured to periodically store the routing information in the external server (6); and the auxiliary node (4) is configured to retrieve the routing information from the external server (6).

14. System according to any of the previous claims, wherein the system is configured to, if the core node (3) fails, route all traffic from the radio access network (1) intended for the core node (3) to the auxiliary node (4) through a physical connection (5) between the core node (3) and the auxiliary node (4) transparent to the radio access network (1).

15. System according to any of the previous claims, wherein the auxiliary node (4) is further configured to, if the core node (3) fails:
- load in the auxiliary node (4) the routing information sent by the core node (3);
- and route in the auxiliary node (4) all the traffic received at the core node (3) using the loaded routing information.
